# EUROPEAN PATENT SPECIFICATION

(11) **EP 1 504 424 B1**
(45) Date of publication and mention of the grant of the patent: **10.09.2008**
(21) Application number: 03722850.9
(22) Date of filing: 12.05.2003
(51) Int. Cl.: G06F 21/00, G07F 7/10

(54) **AN AUTHENTICATION TOKEN**
AUTHENTIFIZIERUNGSWERTMARKE
JETON D'AUTHENTIFICATION

(30) Priority: 10.05.2002 GB 0210692; 20.06.2002 US 176974
(43) Date of publication of application: 09.02.2005
(73) Proprietor: Prism Technologies LLC, Omaha, NE 68154-1952 (US)
(72) Inventor: BUCK, Peter c/o Quizid Technologies Ltd., London WC2N 4JF (GB); NEWPORT, Peter c/o Quizid Technologies Ltd., London WC2N 4JF (GB)
(74) Representative: Finnie, Peter John
(86) International application number: PCT/GB2003/002028
(87) International publication number: WO 2003/096287

(56) References cited:
- EP-A- 0 174 016
- WO-A-01/26062
- WO-A-98/45980
- GB-A- 2 317 983
- GB-A- 2 361 790
- US-A- 3 764 742
- US-A- 4 605 820
- US-A- 5 060 263
- US-A- 5 317 636
- US-A- 6 163 771

## Description

### Field of the Invention

The present invention relates to an authentication token using a smart card.

### Background to the Invention

There are a variety of technologies available to authenticate remote users in order to enforce secure access control. These range from simple, single factor authentication (such as use of a password) to multiple factor authentication (such as use of a physical token in conjunction with a Personal Identification Number (PIN)). It is widely accepted that single factor authentication offers limited assurance as it is vulnerable to a wide range of attacks, many of which are neither sophisticated nor expensive to mount (such as 'shoulder surfing' or eavesdropping). Most online services, however, still rely on single factor authentication because it appears to be the cheapest to implement - although this is usually because the subsequent cost of dealing with systematic attacks has not been considered.

Dual factor authentication systems are, however, widely used to protect remote access by support staff to these same online services. Many organisations also protect access to their critical corporate systems, both remotely and locally, using such authentication mechanisms. The essence of a dual factor mechanism is that it requires both 'something you know', for example, a PIN or passcode, and 'something you have', for example a physical token that can be authenticated itself. Increasingly, research is being done to add a third type of factor, 'something you are' i.e. biometrics such as retina scan, iris scan or fingerprint, but this is not yet available in a reliable cost-effective way that can be used reliably in a mass-market type environment.

There are a variety of tokens available that can fulfil the role of the second factor ('something you have'), but many of them rely on an infrastructure of interface devices to be able to authenticate them. Thus, use of a smart card requires a card reader to be available to enable the system to interact with the application resident on the smart card. New form factors have been explored to reduce this reliance, such as Universal Serial Bus (USB) tokens that can plug directly into a USB port on a computer. Many new PCs are being shipped with USB ports instead of the older style serial ports or parallel ports, most notebook computers now only have USB ports and all Apple computers have had easily accessible USB ports since the launch of the iMac in 1998.

To remove the dependence on an external infrastructure and to enable the token to be used in as wide a range of channels as possible, a number of manufacturers have developed stand-alone tokens that do not need to be connected to the remote computer system. They interact with the user via a screen and keypad. The user then interacts with the remote system through whatever channel they are using i.e. web, Wireless Application Protocol (WAP) phone, voice, TV set-top box.

Stand-alone tokens generally offer one or more mechanisms by which they can authenticate themselves to the remote system. One approach is for the system to issue a 'challenge' to be entered into the token, for example an apparently meaningless string of numbers. The token applies a cryptographic process, using the challenge and other information that is kept secret inside the token. As a result, it generates a 'response', which is displayed to the user to be sent back to the remote system. The remote system can check that the response received is the correct response from that token to the challenge sent and hence ascertain the authenticity or otherwise of the token. This process may use a symmetric cryptographic process with keys that are shared between the token and the remote system. Alternatively, it may use an asymmetric cryptographic process, removing the need for shared secret keys but requiring significantly more processing capability in the token. In most cases, the remote system does not generate the challenge and authenticate the token's response itself but uses a dedicated local authentication server which is especially established for that purpose and can provide the facility to multiple systems within the same organisation.

There is a variant on this approach where the challenge is generated internally to the token, based on a combination of static data, deterministically varying data (such as an event counter), and dynamic data (such as time). The authentication server must be maintained in synchronisation with the token so that it can reproduce the same challenge when it attempts to validate the response.

An alternative approach has been to use a modem version of the old tried and tested method of having a series of passwords each of which can only be used once. This approach was used by the military for many years, supplying a pad of slips of paper, each of which had a one-time password printed on it. As each password was used it was ripped from the pad and discarded. A matching pad was maintained at the other end to enable messages to be validated. The modem approach is to use a cryptographic process to generate a one-time password dynamically when it is needed. The token and the authentication server share secret information that can be combined with dynamic information available to both (for real-time systems this can be the time) enabling the authentication server to be able to generate the same one-time password that the token has generated and thus validate it. This mechanism uses a symmetric cryptographic process, which enables it to be carried out quickly and cost-effectively in the token. It does not require as much processing at the authentication server as no challenge needs to be generated at the outset, hence only a single interaction is needed between the protected system and the authentication server to authenticate the user.

Smart cards are in use worldwide for a variety of purposes. They have long been in use for financial products (credit, debit and loyalty cards), especially in France where they were invented. With the advent of GSM mobile phones, the smart card market has significantly increased with the need for Subscriber Identification Modules (SIMs). The technology used on smart cards lags leading edge semiconductor technology by 2 or 3 years, thus the speed and power of the processors are relatively low and memory is restricted. As more ambitious uses are devised for smart cards, the technology required is becoming more complex and hence the cost of the cards is increasing. Conversely, the increasing size of the market has led to economies of scale in the most widely used technologies (such as those required for GSM SIMs or memory chips as used in digital cameras and MP3 players).

Asymmetric cryptographic functions are heavily processor intensive and hence significantly slower than symmetric functions (of the order of 100 times slower). The limited processing capability of most smart card chips has restricted their practical use to symmetric cryptographic functions. However, smart card chips are now available with cryptographic co-processors that can execute asymmetric cryptographic functions much more quickly enabling such functions to become a practical option. The newest versions of specifications such as EMV (credit/debit card functionality defined jointly by Europay/MastercardNisa) take advantage of these improved capabilities to provide better security features.

Most smart cards have in the past been produced with a specific single application hardwired into Read Only Memory (ROM). International standards (specifically ISO 7816) have established common specifications for smart cards, ranging from size and shape and where the contacts should be, through the electrical characteristics, to the basic communications protocol to interact with the card and the underlying filing system structure that should be implemented on it. Some manufacturers have produced simple proprietary operating systems to handle all the standard activities (like the interface protocol) on behalf of the applications. However, the smart card still has to be hardwired at manufacture with the operating system software and the application software in the ROM. The standards allow for the application software on the card to offer multiple separate 'applications' (such as a credit card, loyalty card and electronic purse) selectable by the interface device with which the card is used. The required application is selected when the card is powered up and 'reset' by the interface device and the appropriate interaction is then conducted with the card. However, these separate applications must all reside together in the smart card's ROM and share the same data areas. Accordingly, they must all trust each other to ensure that the data for one is not read or overwritten by another. Generally, therefore, such cards will only have separate applications that have all been developed by (or for) the same organisation that is issuing the card.

To address these shortcomings, some multi-application smart card operating systems have been developed. These require only the operating system to be hardwired into the smart card's ROM. Applications can be loaded into the card's Electrically Eraseable Programmable Read Only Memory (EEPROM) after manufacture. Indeed, they can be subsequently removed or replaced allowing upgraded applications to be delivered onto the smart cards even after they have been issued to end users. To ensure that the applications can not interfere with each other, the applications themselves are written in an interpreted language (such as Java) and the actual execution is under the control of the card's operating system, thus allowing address range checking and other mechanisms to be used to isolate each application and its data. The initial cost of using such cards has led to a slow take up of the technology, but increasing capability of the card processors and larger memory is increasing their practical applicability. New GSM SIMs will be available on multi-application cards, allowing service operators to offer customisable functionality on the SIM independent of the particular phone in use, including value-added services.

The Applicant offers a remote authentication service under the name QUIZID to enable users of a protected computer system (internal users or external customers) to be securely authenticated before being allowed access to the protected system. The current authentication mechanism relies on a device (which must be 'personalised' and securely delivered to the user) that generates one-time passwords; use of the device itself is secured by the use of a colour-coded unique consumer code that must be entered by the user in order to obtain a password. The password and a user ID, entered into the protected system, are sent to QUIZID for validation and if a successful response is received the system can allow access to the user. A more detailed description of this can be found in PCT/GB01/05507. How the QUIZID service is used in relation to other identifying information such as account names or user identification is up to the designers of the protected system. The QUIZID service is designed to be used for protecting access to corporate systems as well as publicly accessible systems such as e-tailers or financial services.

The document EP-A-0 174 016 discloses an authentication token for generating a one-time password for use in authenticating a user of the authentication token, wherein the authentication token comprises a smart card having:
memory storing each of a unique consumer code, a key, and a software application; and,
a processor for executing the software application, wherein the software application is
responsive to a user input to validate the user input against the unique consumer code and to then generate the one-time password as an output by performing the steps of:
   executing a cryptographic algorithm to encrypt a dynamic variable with the key to produce an encrypted payload.

### Summary of the Invention

Claims 1, 28, 29 disclose the present invention. Preferred embodiments are disclosed in claims 2-27, 30-39.

The present invention provides a design for a remote authentication token using a smart card that an organisation would issue to its customer, along with an interface device to display the one-time password. In a preferred implementation, the invention is used in combination with a remote authentication server for validation of the password and is thus interoperable with the current QUIZID service.

As described above, many financial services are now issuing 'smart' credit or debit cards which have already been personalised and securely delivered to the customer. These same organisations are offering online services that need effective user authentication to protect access to customer data as required by legislation. Consequently, for authentication purposes, use of a smart card that has already been delivered to the customer is cost-effective and will help to reinforce both the organisation's brand and its commitment to security.

### Brief Description of the Drawings

Examples of the present invention will now be described in detail with reference to the accompanying drawings, in which:
Figure 1 shows the distribution of components across the memory of a multi-application smart card;
Figure 2 shows the interaction between a smart card and a personalisation device; and,
Figure 3 shows the interaction between a smart card, an interface device and a user.

### Detailed Description

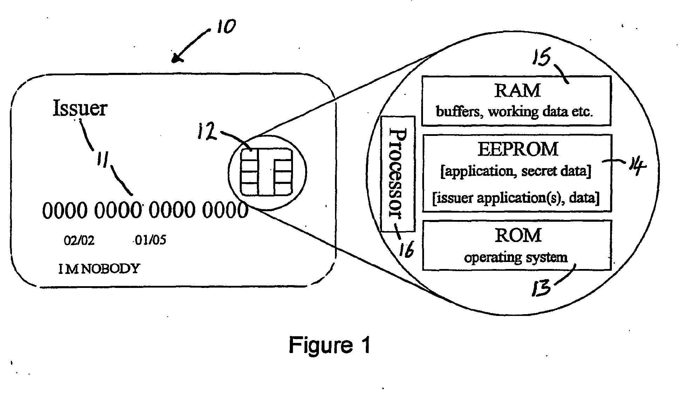

With reference to Figures 1 to 3 generally, we now describe the proposed token, including the components of the token, namely the smart card itself and the interface device. We also describe the operation of the token, including the end-user interaction with the token in normal use, the operation of the various components and the interaction between them, and the handling of error conditions. The remote authentication token proposed here combines the functionality of authentication technology, including that provided by the existing QUIZID remote authentication service (described in more detail in PCT/GB01/05507), with the convenience of smart card technology. This type of technology is either already in use or about to be launched by many organisations, especially in the financial services sector.

Figure 1 shows an example of a smart card 10, which in common with many types of payment card displays account and issuer information 11, and also contains a microchip 12. The chip 12 comprises various types of on board memory, including ROM 13, EEPROM 14 and RAM 15, and also a processor 16. Thus, not only can information be stored on the card, but also an application can be loaded onto the card issued by an organisation to an end-user, for example a credit card with the EMV application. The card has already been personalised for the end-user by the issuer and has been delivered to them by some secure means.

The smart card also contains the authentication application itself. This includes the secret data that is used to generate the passwords and the colour coded unique consumer code. Since the issuing organisation will already be incurring the costs associated with issuing the smart card the additional costs to include the authentication application would be relatively low. The smart card may also contain one or more of the issuer's applications.

The authentication application may be loaded onto the card in one of two ways, depending on the type of smart card.

A 'single application' smart card will have the application and a limited operating system 'burnt' into the ROM 13 at chip manufacture. In this case a version of the authentication application will have been developed in the appropriate language for the card's processor (which may be assembler or a higher level language depending on the chip and tool support). This version of the authentication application will be supplied to the issuer for examination and integration into the ROM mask to be hardwired into the card's chip 12. It may also be combined with the issuer's application(s) prior to manufacture to make the ROM mask. Cards with the application already in the ROM 13 are delivered to the issuer. The card itself is then personalised by the issuer (embossing etc.) and the authentication application is personalised using a specific personalisation device.

If the card is a multi-application card, the operating system will be 'burnt' into the ROM 13 at chip manufacture. The authentication application and any issuer applications will be subsequently loaded onto card. Cards containing only the operating system are delivered to the issuer. The issuer's applications are loaded onto the card through an interaction with the operating system. A version of the authentication application will have been developed in the appropriate language for the card's operating system (such as Java for Javacard or MEL for Multos) and then signed and certified. This version can be loaded at the same time, separately or even subsequently, for example during personalisation by the issuer. Once the authentication application has been loaded it is personalised using a specific personalisation device. Although the multi-application operating systems allow for the loading and personalisation of the authentication application after the card has been issued, in the preferred embodiment it is not intended to issue cards prior to establishing the authentication application on them.

As indicated, whichever type of smart card 10 is used, the application will be personalised to ensure the correct secret data is in the card's EEPROM 14 along with an initial colour coded unique consumer code. Until the application is personalised it cannot be used. Once personalised it cannot be re-personalised. In the following embodiment, the application, once personalised will contain the following elements:
- a secret key (SK) stored in EEPROM, used by the cryptographic algorithm to generate passwords;
- a unique consumer code stored in EEPROM, used to validate the code entered by the user;
- a monotonically increasing register (MIR) stored in EEPROM, used by the cryptographic algorithm to generate passwords;
- a seed value (V) stored in EEPROM, used by the key generation algorithm; and,
- application software to respond to application commands, generate a password and generate a new key.

The application that is loaded onto the smart card operates in three modes. Each mode allows a different limited range of interactions. When the application is first loaded it is in *Personalisation* mode. In this mode it will respond only to a personalisation command. After personalisation the application is in *Normal* mode. In this mode it will interact with an interface device to generate passwords when presented with a valid colour coded unique consumer code. If the incorrect unique consumer code is entered in sequential attempts (beyond a pre-set limit) the application enters *Locked* mode. In this mode the application will only accept (a limited number of) attempts to enter the correct unlock code. If the correct unlock code is entered, the application reverts to *Normal* mode. The application can never be returned to *Personalisation* mode.

When the application is loaded onto the smart card it is in a non-personalised state. The secret data has been set to starting values, but the unique key for the card has not been set. The card itself does, however, have a unique serial number. The application is in Personalisation mode. It will not accept any commands from a user's interface device in this mode. It will, however, accept a personalisation command from a personalisation device. The personalisation device requests the serial number, and establishes a private communications channel with the application to enable it to issue the application with seed values for the secret key and the key generation algorithm. The same data is stored securely by the personalization device for subsequent loading into the authentication server. The card serial number can be used to determine the usemame that the issuer will associate with the card. Once the seed has been used by the application to set the initial secret key, the application switches to Normal mode.

While there are a variety of suitable mechanisms to secure the communications between the personalisation device and the application, the preferred implementation is to use a key exchange protocol to establish a transport key, supplemented by a pre-defined personalisation key to protect against 'man in the middle' attacks. This is necessary because, although the card may be personalised at the same time that it is loaded with the application, in a multi-application card environment this may be subsequent to the manufacture or issuer personalisation of the card. It may even be performed remotely from the personalisation device, which could be at (or incorporated into) the authentication server, and must therefore be protected against interception.

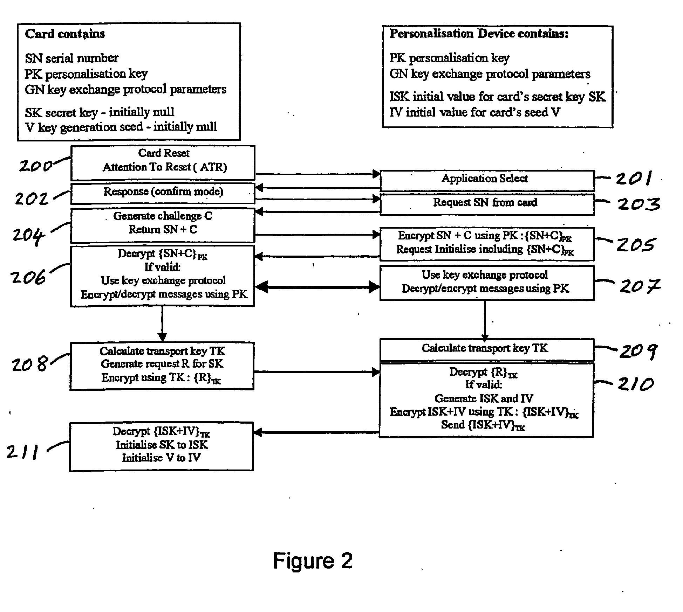

An example of a personalisation interaction is illustrated in Figure 2 and the steps involved are described below:
- initially, the card is reset (step 200) and responds with an Attention to Reset (ATR).
- the personalisation device selects (step 201) the authentication application and determines (step 202) that it is in personalisation mode.
- the personalisation device requests (step 203) the card serial number and receives (step 204) the serial number (SN) and a challenge (C) from the card application.
- using the pre-defined Personalisation Key (PK) the personalisation device encrypts (step 205) SN and C and returns the encrypted value to the card in a request to commence initialisation.
- the card application decrypts (step 206) the received data using PK and validates it as correct. This demonstrates that both the card application and the personalisation device are using the correct PK.
- if successful, the card application uses (step 206) the key exchange protocol to generate messages to send back to the personalisation device. The key exchange protocol itself is inherently protected against interception, but the messages are also encrypted (step 206) using PK to protect against 'man in the middle' attacks.
- the personalisation device responds (step 207) with the appropriate key exchange protocol messages, encrypted using PK.
- at the end of the key exchange, both the card application (step 208) and the personalisation device (step 209) have a unique shared key that is unknown to anyone else including eavesdroppers. This key is used as a Transport Key (TK) for the rest of the personalisation process.
- the card application generates a request (step 208) (R) for its Secret Key (SK), encrypts (step 208) the request using TK and sends it to the personalisation device.
- the personalisation device decrypts (step 210) the request using TK and validates it as correct. This demonstrates that both the card application and the personalisation device are using the same TK and hence that the key exchange process has worked correctly.
- if successful, the personalisation device generates (step 210), or obtains from a pre-generated list, the Initial Secret Key (ISK) and the Initial Value (IV) for the card application's key generation seed (V). ISK and IV are encrypted (step 210) using TK and sent to the card.
- the card application decrypts (step 211) the received data using TK, initialises (step 211) its SK to ISK and initialises (step 211) its V to IV. The card application now enters Normal mode.
- the personalisation device delivers (step 210) the ISK and IV to the authentication server (if they were not pre-generated and hence already in the authentication server) securely.

Although there may be a number of suitable key exchange protocols available, the preferred implementation is to use the Diffie-Hellman exchange which is within the processing capabilities of the card and does not rely on out of band secure communications to pre-establish any shared secret. The Diffie-Hellman exchange operates as follows:
- the card application and personalisation device both know the pre-defined values 'n' (a large prime number) and 'g' (a small single digit number that is primitive mod n). These don't need to be kept secret and can be common to all cards, therefore are included in the application that is loaded onto the card;
- the card application generates a large random integer 'x';
- the card application calculates A = g^{x} mod n;
- the card application sends A to the personalisation device;
- the personalisation device generates a large random integer 'y';
- the personalisation device calculates P = g^{y} mod n;
- the personalisation device send P to the card application;
- the card application calculates K1 = P^{x} mod n;
- the personalisation device calculates K2 = A^{y} mod n; and,
- both K1 and K2 are equal to g^{xy} mod n and hence the card application and the personalisation dvice have calculated the same key which can now be used as the Transport Key (TK).

The second main component of the authentication token is the interface device provided to the end-user. The interface device is a device that can be used with a user's smart card to enable the generation of a password. The device could take a variety of forms, for example a pen or a calculator or a mobile phone battery pack. When the smart card is inserted into the interface device, the user is prompted to enter their colour coded unique consumer code and, if correct, the output response from the interface device is a one-time password. A password so generated can then be entered into the access device, such as a PC, a telephone, a WAP phone, or even by voice, for the service that requires the authentication.

As the smart card is personalised to the customer, the interface device does not need to be. Users, therefore, can share an interface device, for example one at home for use by all members of a family. Equally, users can have more than one, for example one at home, one in the office. Users can even, safely, borrow an interface device from a stranger, for example in a cybercafé or a restaurant. Therefore, in one embodiment, the interface devices are preferably generic, hence all identical and requiring no personalisation for each customer. As they do not need to be personalisable or securely delivered to users (they could even be available over the counter if the issuing organisation has a branch network), it should be possible to keep the associated cost significantly low.

The interface device provides the power to the smart card to enable it to operate. It also includes a real-time clock to enable time to be used as a dynamic input into the password generation process. It therefore includes a battery, which has a reasonably long life but is not accessible by the user. After manufacture, the device's clock can be synchronised with the service's system-wide time through the smart card interface. When battery replacement is required, the device's clock must once again be synchronised (which is why the battery is not user-replaceable). When no smart card is inserted in the slot, the device only provides power to the real-time clock. When a smart card is inserted, the device powers up and applies power to the smart card and to itself. When the smart card is removed the device powers down. For this reason, the device needs no user accessible power switch.

Although the interface device may take one of many forms, it will typically include the following five elements:
i. an interface to the token, initially a set of smart card contacts, but other interfaces would be possible, such as Bluetooth;
ii. an input mechanism, such as a keypad for entry of the colour coded unique consumer code and for menu selection;
iii. an output mechanism, such as a display screen, although other mechanisms could be provided such as voice output for the blind;
iv. a source of a dynamic input to the password generation, such as a battery operated real-time clock; and,
v. a processor with application software to handle the interfaces.

Once the user has received the smart card and an interface device they can use the combination to authenticate themselves to the issuer's services, as and when required. The authentication is assured either by an authentication server operated by the issuer themselves or by a shared authentication server such as described in PCT/GB01/05507.

There are many different business models within which strong authentication would be advantageous. An example is given below of a typical interaction, where the issuer provides an online e-commerce service requiring the users to authenticate themselves when they place an order.
1. User browses issuer's online service on their PC.
2. User places order on service.
3. Service prompts user for authentication password in secure form.
4. User inserts smart card into an interface device.
5. Interface device prompts for colour coded unique consumer code entry.
6. User enters colour coded unique consumer code into the interface device.
7. Interface device displays password.
8. User enters password into secure form on issuer's online service on their PC.
9. Service authenticates password with remote authentication service.
10. Service confirms authentication to user, accepts order.
11. User removes the smart card from the interface device.

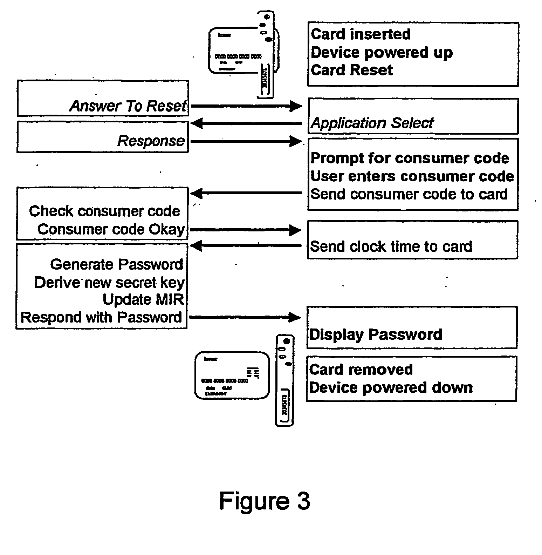

When the smart card is issued to the user, the application will have been personalised and will be in Normal mode. The user can then use a generic interface device to change the colour coded unique consumer code from the pre-set initial value to one of their own choice. The card will now be able to interact with a generic interface device to generate a password. An example of this type of interaction is shown in Figure 3.

The process used to generate the one-time password relies on the use of a secret key (SK) in conjunction with a tried and tested cryptographic algorithm. The data that is processed by the algorithm to generate the password is derived from a Monotonically Increasing Register (MIR) that is maintained within the card application and tracked at the authentication server, along with a Dynamic Variable (DV) that can be validated or reproduced at the authentication server. To increase the variability of the passwords and the difficulty of an attempt to spoof the password generation, the secret key is itself modified after each password generation using a key generation algorithm. The authentication server must apply the same algorithms to validate the password and keep in synchronisation with the MIR, SK and V on the card.

The process for password generation is as follows:
- the MIR is concatenated with the DV to produce a payload (L);
- L is encrypted using the cryptographic algorithm with SK to produce G;
- the least significant bits of G are used to generate an integer 1;
- the least 2 significant bits of DV, concatenated with the least significant bit of MIR, are used to generate an integer D;
- I is combined with D to produce the password;
- the key generation algorithm uses MIR and SK and a seed V to generate a new key NK and a new seed NV;
- SK is replaced with NK;
- V is replaced with NV; and,
- MIR is incremented.

The inclusion of the 3 bits that are used to create D, enables the authentication server to detect loss of synchronisation with the application on the card. The authentication server will be maintaining its own copy of the MIR for each card. When the password arrives to be validated at the authentication server, the least significant bit of the MIR on the card, as included in the password via D, should match that of the MIR in the server. If not, there may have been a previous password generated that did not arrive at the server, in which case the server increments the MIR and executes the key generation algorithm to obtain the appropriate SK. Similarly, the 2 least significant bits of the DV included in the password via D can be compared with those of the DV reproduced at the authentication server, allowing for a discrepancy to be detected and corrected before the password is validated. Parameters can be established at the authentication server to determine whether (and how many) subsequent values of the MIR should be tried if the validation fails.

The combination of I and D can be achieved in a variety of ways. The 3 bits of D can be interspersed at pre-determined positions in I, the resulting value then being interpreted as a decimal value. Any length password can be generated by selecting the appropriate number of bits of the output of the cryptographic algorithm, for example an eight digit password would be produced from a 26 bit value composed of the 3 bits of D and 23 bits of I. Alternatively, I can be interpreted as a decimal value (the length depending on the number of bits used) and D interpreted as a decimal value (one digit in length as only 3 bits are used). The resulting password would be created by concatenating the digits derived from I with the digit derived from D (or inserting the digit from D into the digits from I). Again, any length password can be generated by selecting the appropriate number of bits of the output of the cryptographic algorithm. An eight digit password would require 23 bits to be used to produce I which would be 7 digits long, with D providing the eighth digit. In the preferred embodiment, an eight digit password will be generated by interpreting 23 bits of the cryptogram as a 7 digit decimal integer I and appending a decimal digit interpreted from the 3 bits of D.

The preferred implementation is to use the Advanced Encryption Standard (AES) with 128 bit keys as the cryptographic algorithm, along with a key generation algorithm based on ANSI X9.17 but using AES and generating 128 bit keys. One of the strengths of AES is that there are no known weak keys, so all keys generated by the key generation algorithm would be acceptable.

As each card must work with any one of the interface devices, the source of the DV in the initial embodiment will be a real-time clock in the interface device. In future embodiments, when the smart card may have it's own source of power, there will be other sources of dynamic variable that could be maintained within the card itself.

The example shown in Figure 3 illustrates the case where the user enters the unique consumer code correctly first time. If the unique consumer code entered is incorrect the application will respond 'code incorrect' and the interface device will re-prompt for the unique consumer code. This can happen repeatedly up to a pre-set limit, for example three attempts. If the unique consumer code has not been entered correctly within the limited number of attempts, the application will respond 'Locked' and the interface device will inform the user that the application is locked. The application will enter Locked mode.

When the application is in Locked mode it will not accept commands to generate a password. It will not respond to the normal interactions. When the interface device attempts to interact with the application, it is told (in the Answer To Reset) that the application is locked and informs the user that the application is locked. If the user then enters a sequence of colour codes the interface device will send them to the application as an unlock command. The correct sequence will cause the application to unlock and revert to Normal mode. To obtain the correct sequence the user will have to contact a customer support function. The unlock sequence will only work once. If the application is subsequently locked again a different unlock sequence will be required.

## Claims

1. An authentication token for generating a one-time password for use in authenticating a user of the authentication token, wherein the authentication token comprises a smart card (10) having:
memory (13, 14, 15) storing each of a unique consumer code, a key, a seed value, and a software application; and,
a processor (16) for executing the software application, wherein the software application is responsive to a user input to validate the user input against the unique consumer code and to then generate the one-time password as an output by performing the steps of:
executing a cryptographic algorithm to encrypt a dynamic variable with the key to produce an encrypted payload; and,
using least significant bits of the encrypted payload and the dynamic variable to produce the one-time password,
and wherein, prior to the generation of a subsequent one-time password, the software application further performs the steps of:
executing the key generation algorithm using the key and the seed value to generate a new key and a new seed value;
replacing the key with the new key; and,
replacing the seed value with the new seed value.

2. A token according to claim 1, in which memory of the smart card (10) also stores a Monotonically Increasing Register (MIR) and the software application includes a code portion for maintaining the register, and wherein the software application generates the one-time password by performing the further step of:
combining the Monotonically Increasing Register (MIR) with the dynamic variable to produce a payload prior to encrypting the payload with the key to produce the encrypted payload;
and wherein, prior to the generation of the subsequent one-time password, the software application performs the further steps of:
executing the key generation algorithm using the Monotonically Increasing Register (MIR) in addition to the key and the seed value to generate the new key and the new seed value; and,
incrementing the Monotonically Increasing Register.

3. A token according to claim 2, in which the one-time password is generated by:
concatenating the Monotonically Increasing Register (MIR) with the dynamic variable to produce the payload prior to encrypting the payload to produce the encrypted payload;
generating a first integer using least significant bits of the encrypted payload;
generating a second integer by concatenating the two least significant bits of the dynamic variable with the least significant bit of the Monotonically Increasing Register; and,
combining the first integer with the second integer to produce the one-time password.

4. A token according to any preceding claim, in which the cryptographic algorithm is the Advanced Encryption Standard (AES).

5. A token according to any preceding claim, in which the key generation algorithm uses the Advanced Encryption Standard (AES).

6. A token according to claim 5, in which the key is a 128-bit key.

7. A token according to any preceding claim, in which the memory comprises a read only memory (ROM) (13) into which the software application is burnt during manufacture.

8. A token according to any preceding claim, in which the software application enters a locked mode if the user input has not been validated against the unique consumer code after a predetermined number of user inputs.

9. A token according to any preceding claim, in which the software application includes a code portion for personalising the token by initialising the key.

10. A token according to claim 9, in which the software application includes a code portion for initialising the key by exchanging messages with a separate personalisation device using a key exchange protocol.

11. A token according to claim 10, in which the key exchange protocol messages are encrypted.

12. A token according to claim 11, in which the key exchange protocol uses the Diffie-Hellman key exchange algorithm.

13. A token according to any preceding claim, in which the software application includes a code portion for personalising the token by initialising the seed value.

14. A token according to any preceding claim, in which the dynamic variable is time.

15. A token according to claim 14, in which the dynamic variable is derived from an external input.

16. A token according to any of claims 1 to 14, in which the dynamic variable is provided internally by the smart card.

17. A token according to any preceding claim, in which the smart card (10) derives electrical power from an external input.

18. A token according to any of claims 1 to 13, in which the token further comprises a separate interface device for cooperating with the smart card (10) to enable the generation of the one-time password, the interface device comprising:
a user input device for entering the user input to be validated against the unique consumer code;
a user output device for communicating to the user the one-time password generated by the smart card;
a smart card interface for communicating data between the interface device and the smart card (10), including communicating to the smart card (10) the user input received via the user input device and communicating the one-time password generated by the smart card (10) to the user output device;
interface application software to handle the interfaces; and,
a processor for executing the interface application software.

19. A token according to claim 18, in which the interface device maintains a dynamic variable which, in response to execution of the software applications, is communicated to the smart card (10) for use in generating the one-time password.

20. A token according to claim 19, in which the interface device comprises a clock which provides the dynamic variable.

21. A token according to claim 20, in which the clock is synchronised with an external clock.

22. A token according to any of claims 18 to 21, in which the interface device is adapted to provide electrical power to the smart card (10).

23. A token according to any of claims 18 to 22, in which the user input device is a keypad.

24. A token according to any of claims 18 to 23, in which the user output device is a display.

25. A token according to any of claims 18 to 24, in which the smart card interface is adapted to be directly coupled to the smart card (10).

26. A token according to any of claims 18 to 24, in which the smart card interface is adapted to be coupled to the smart card (10) over a wireless communications channel.

27. A token according to any of claims 18 to 24, in which the unique consumer code is colour coded.

28. An authentication system comprising an authentication server and an authentication token according to any preceding claim, the authentication server adapted to authenticate the user of the token in dependence on the one-time password generated by the token.

29. A method of generating a one-time password for use in authenticating a user of an authentication token comprising a smart card (10), the method comprising the steps of:
storing in memory (13,14,15) of the smart card (10) each of a unique consumer code, a key, and a seed value; and,
executing an authentication software application of the smart card (10) in a processor of the smart card (10), whereby the software application validates a user input against the unique consumer code and then generates the one-time password by performing the steps of:
executing a cryptographic algorithm to encrypt a dynamic variable with the key to produce an encrypted payload; and,
using least significant bits of the encrypted payload and the dynamic variable to produce the one-time password,
and whereby, prior to the generation of a subsequent one-time password, the software application further performs the steps of:
executing a key generation algorithm using the key and the seed to generate a new key and a new seed;
replacing the key with the new key; and replacing the seed with the new seed.

30. A method according to claim 29, further comprising storing in memory of the smart card (10) a Monotonically Increasing Register and wherein the software application generates the one-time password by performing the further steps of:
combining the Monotonically Increasing Register with the dynamic variable to produce a payload prior to encrypting the payload with the key to produce the encrypted payload;
and wherein, prior to the generation of the subsequent one-time password, the software application performs the further steps of:
executing the key generation algorithm using the Monotonically Increasing Register in addition to the key and the seed value to generate the new key and the new seed value; and,
incrementing the Monotonically Increasing Register.

31. A method according to claim 30, in which the one-time password is generated by:
concatenating the Monotonically Increasing Register (MIR) with the dynamic variable to produce the payload prior to encrypting the payload to produce the encrypted payload;
generating a first integer using least significant bits of the encrypted payload;
generating a second integer by concatenating the two least significant bits of the dynamic variable with the least significant bit of the Monotonically Increasing Register; and,
combining the first integer with the second integer to produce the one-time password.

32. A method according to any of claims 29 to 31, in which the cryptographic algorithm is the Advanced Encryption Standard (AES).

33. A method according to any of claims 29 to 32, in which the key generation algorithm uses the Advanced Encryption Standard (AES).

34. A method according to claim 33, in which the key is a 128-bit key.

35. A method according to any of claims 29 to 34, in which the dynamic variable is time.

36. A method according to claim 35, in which the dynamic variable is derived from an external input.

37. A method according to any of claims 29 to 35, in which the dynamic variable is provided internally by the smart card (10).

38. A method according to any of claims 29 to 37, in which the token further comprises an interface device for cooperating with the smart card (10) to enable the generation of the one-time password, and wherein the method further comprises the steps of:
receiving the user input at the interface device;
communicating the user input from the interface device to the smart card (10); and,
communicating the one-time password generated responsive to the user input from the smart card (10) to the interface device.

39. A method of authenticating a user of an authentication token comprising the steps of generating a one-time password by the method of any of claims 29 to 38 and passing the one-time password to a third party in order to authenticate the user.

## Patentansprüche

1. Authentifizierungs-Token zum Erzeugen eines Einmal-Passwortes zur Verwendung bei der Authentifizierung eines Benutzers des Authentifizierungs-Tokens, wobei der Authentifizierungs-Token eine Smart Card (10) enthält, umfassend:
einen Speicher (13, 14, 15) zum Speichern von jedem von einem eindeutigen Kundencode, einem Schlüssel, einem Saatwert (Seed Value), und von einer Software-Anwendung; und
einen Prozessor (16) zum Ausführen der Software-Anwendung, wobei die Software-Anwendung auf eine Benutzereingabe anspricht, um die Benutzereingabe gegen den eindeutigen Kundencode zu validieren und um anschließend das Einmal-Passwort als eine Ausgabe zu erzeugen, indem die Schritte durchgeführt werden:
Ausführen eines Verschlüsselungsalgorithmus, um eine dynamische Variable mit dem Schlüssel zu verschlüsseln, um eine verschlüsselte Nutzlast zu produzieren; und
Verwenden der Bits mit der geringsten Signifikanz der verschlüsselten Nutzlast und der dynamischen Variablen, um das Einmal-Passwort zu produzieren,
und wobei, vor der Erzeugung eines nachfolgenden Einmal-Passworts, die Software-Anwendung weiterhin die Schritte durchführt:
Ausführen des Schlüsselerzeugungsalgorithmus unter Verwendung des Schlüssels und des Saatwerts, um einen neuen Schlüssel und einen neuen Saatwert zu erzeugen;
Ersetzen des Schlüssels mit dem neuen Schlüssel; und
Ersetzen des Saatwerts mit dem neuen Saatwert.

2. Token nach Anspruch 1, in welchem der Speicher der Smart Card (10) außerdem ein monoton steigendes Register (Monotonically Increasing Register, MIR) speichert und die Software-Anwendung einen Code-Abschnitt zum Aufrechterhalten des Registers umfasst, und wobei die Software-Anwendung das Einmal-Passwort durch Ausführen des folgenden weiteren Schrittes erzeugt:
Kombinieren des monoton steigenden Registers (MIR) mit der dynamischen Variablen, um eine Nutzlast zu produzieren, vor dem Verschlüsseln der Nutzlast mit dem Schlüssel, um die verschlüsselte Nutzlast zu produzieren;
und wobei, vor der Erzeugung des nachfolgenden Einmal-Passworts, die Software-Anwendung die weiteren Schritte durchführt:
Ausführen des Schlüsselerzeugungsalgorithmus unter Verwendung des monoton steigenden Registers (MIR) zusätzlich zu dem Schlüssel und dem Saatwert, um den neuen Schlüssel und den neuen Saatwert zu erzeugen; und,
Inkrementieren des monoton steigenden Registers.

3. Token nach Anspruch 2, in welchem das Einmal-Passwort erzeugt wird durch:
Verketten des monoton steigenden Registers (MIR) mit der dynamischen Variablen, um die Nutzlast zu produzieren, vor dem Verschlüsseln der Nutzlast, um die verschlüsselte Nutzlast zu produzieren;
Erzeugen einer ersten ganzen Zahl unter Verwendung der Bits mit der geringsten Signifikanz der verschlüsselten Nutzlast;
Erzeugen einer zweiten ganzen Zahl durch Verketten der zwei Bits mit der geringsten Signifikanz der dynamischen Variablen mit dem Bit mit der geringsten Signifikanz des monoton steigenden Registers; und,
Kombinieren der ersten ganzen Zahl mit der zweiten ganzen Zahl, um das Einmal-Passwort zu erzeugen.

4. Token nach einem vorhergehenden Anspruch, in welchem der Verschlüsselungsalgorithmus der Advanced Encryption Standard (AES) ist.

5. Token nach einem vorhergehenden Anspruch, in welchem der Schlüsselerzeugungsalgorithmus den Advanced Encryption Standard (AES) verwendet.

6. Token nach Anspruch 5, in welchem der Schlüssel ein 128-Bit-Schlüssel ist.

7. Token nach einem vorhergehenden Anspruch, in welchem der Speicher einen Nur-Lese-Speicher (Read Only Memory, ROM) (13) umfasst, auf den die Software-Anwendung während der Herstellung gebrannt wird.

8. Token nach einem vorhergehenden Anspruch, in welchem die Software-Anwendung in einen gesperrten Modus tritt, wenn die Benutzereingabe nach einer vorgegebenen Anzahl von Benutzereingaben nicht gegen den eindeutigen Kundencode validiert wurde.

9. Token nach einem vorhergehenden Anspruch, in welchem die Software-Anwendung einen Code-Abschnitt zum Personalisieren des Tokens durch Initialisieren des Schlüssels umfasst.

10. Token nach Anspruch 9, in welchem die Software-Anwendung einen Code-Abschnitt zum Initialisieren des Schlüssels durch Austauschen von Nachrichten mit einer separaten Personalisierungseinrichtung unter Verwendung eines Schlüsselaustauschprotokolls umfasst.

11. Token nach Anspruch 10, in welchem die Schlüsselaustauschprotokoll-Nachrichten verschlüsselt sind.

12. Token nach Anspruch 11, in welchem das Schlüsselaustauschprotokoll den Diffie-Hellmann-Schlüsselaustauschalgorithmus verwendet.

13. Token nach einem vorhergehenden Anspruch, in welchem die Software-Anwendung einen Code-Abschnitt zum Personalisieren des Tokens durch Initialisieren des Saatwerts umfasst.

14. Token nach einem vorhergehenden Anspruch, in welchem die dynamische Variable Zeit ist.

15. Token nach Anspruch 14, in welchem die dynamische Variable von einer externen Eingabe bezogen wird.

16. Token nach einem der Ansprüche 1 bis 14, in welchem die dynamische Variable intern von der Smart Card bereitgestellt wird.

17. Token nach einem vorhergehenden Anspruch, in welchem die Smart Card (10) elektrische Energie von einem externen Eingang bezieht.

18. Token nach einem der Ansprüche 1 bis 13, in welchem das Token weiterhin eine separate Schnittstelleneinrichtung zum Kooperieren mit der Smart Card (10) umfasst, um die Erzeugung des Einmal-Passwortes zu ermöglichen, wobei die Schnittstelleneinrichtung umfasst:
eine Benutzereingabeeinrichtung zum Eingeben der gegen den eindeutigen Kundencode zu validierenden Benutzereingabe;
eine Benutzerausgabeeinrichtung, um dem Benutzer das durch die Smart Card erzeugte Einmal-Passwort zu kommunizieren;
eine Smart Card Schnittstelle, um Daten zwischen der Schnittstelleneinrichtung und der Smart Card (10) zu kommunizieren, umfassend das Kommunizieren der über die Benutzereingabeeinrichtung erhaltenen Benutzereingabe an die Smart Card (10) und das Kommunizieren des durch die Smart Card (10) erzeugten Einmal-Passwortes an die Benutzerausgabeeinrichtung;
Schnittstellen-Anwendungssoftware zum Handhaben der Schnittstellen; und
einen Prozessor zum Ausführen der Schnittstellen-Anwendungssoftware.

19. Token nach Anspruch 18, in welchem die Schnittstelleneinrichtung eine dynamische Variable aufrechterhält, die, in Antwort auf die Ausführung der Software-Anwendungen, an die Smart Card (10) zur Verwendung bei der Erzeugung des Einmal-Passwortes kommuniziert wird.

20. Token nach Anspruch 19, in welchem die Schnittstelleneinrichtung eine Uhr umfasst, die die dynamische Variable bereitstellt.

21. Token nach Anspruch 20, in welchem die Uhr mit einer externen Uhr synchronisiert ist.

22. Token nach einem der Ansprüche 18 bis 21, in welchem die Schnittstelleneinrichtung dazu eingerichtet ist, elektrische Energie an die Smart Card (10) bereitzustellen.

23. Token nach einem der Ansprüche 18 bis 22, in welchem die Benutzereingabeeinrichtung ein Keypad ist.

24. Token nach einem der Ansprüche 18 bis 23, in welchem die Benutzerausgabeeinrichtung ein Display ist.

25. Token nach einem der Ansprüche 18 bis 24, in welchem die Smart-Card-Schnittstelle dazu eingerichtet ist, direkt mit der Smart Card (10) verbunden zu werden.

26. Token nach einem der Ansprüche 18 bis 24, in welchem die Smart-Card-Schnittstelle dazu eingerichtet ist, direkt mit der Smart Card (10) über einen drahtlosen Kommunikationskanal verbunden zu werden.

27. Token nach einem der Ansprüche 18 bis 24, in welchem der eindeutige Kundencode farbkodiert ist.

28. Authentifizierungssystem umfassend einen Authentifizierungsserver und ein Authentifizierungs-Token nach einem vorhergehenden Anspruch, wobei der Authentifizierungsserver dazu eingerichtet ist, den Benutzer des Tokens in Abhängigkeit von dem durch das Token erzeugten Einmal-Passwort zu authentifizieren.

29. Verfahren zum Erzeugen eines Einmal-Passwortes zur Verwendung beim Authentifizieren eines Benutzers eines Authentifizierungs-Tokens, umfassend eine Smart Card (10), wobei das Verfahren die Schritte umfasst:
Speichern von jedem von einem eindeutigen Kundencode, einem Schlüssel, und einem Saatwert im Speicher (13, 14, 15) der Smart Card (10); und
Ausführen einer Authentifizierungs-Software-Anwendung der Smart Card (10) in einem Prozessor der Smart Card (10), wodurch die Software-Anwendung eine Benutzereingabe gegen den eindeutigen Kundencode validiert und anschließend das Einmal-Passwort erzeugt, indem die Schritte durchgeführt werden:
Ausführen eines Verschlüsselungsalgorithmus, um eine dynamische Variable mit dem Schlüssel zu verschlüsseln, um eine verschlüsselte Nutzlast zu produzieren; und
Verwenden der Bits mit der geringsten Signifikanz der verschlüsselten Nutzlast und der dynamischen Variablen, um das Einmal-Passwort zu produzieren,
und wodurch, vor der Erzeugung eines nachfolgenden Einmal-Passworts, die Software-Anwendung weiterhin die Schritte durchführt:
Ausführen des Schlüsselerzeugungsalgorithmus unter Verwendung des Schlüssels und der Saat, um einen neuen Schlüssel und eine neue Saat zu erzeugen;
Ersetzen des Schlüssels mit dem neuen Schlüssel; und
Ersetzen der Saat mit der neuen Saat.

30. Verfahren nach Anspruch 29, weiterhin umfassend das Speichern eines monoton steigenden Registers im Speicher der Smart Card (10) und wobei die Software-Anwendung das Einmal-Passwort durch Durchführen der weiteren Schritte erzeugt:
Kombinieren des monoton steigenden Registers mit der dynamischen Variablen, um eine Nutzlast zu produzieren, vor dem Verschlüsseln der Nutzlast mit dem Schlüssel, um die verschlüsselte Nutzlast zu produzieren;
und wobei, vor der Erzeugung des nachfolgenden Einmal-Passworts, die Software-Anwendung die weiteren Schritte durchführt:
Ausführen des Schlüsselerzeugungsalgorithmus unter Verwendung des monoton steigenden Registers zusätzlich zu dem Schlüssel und dem Saatwert, um den neuen Schlüssel und den neuen Saatwert zu erzeugen; und,
Inkrementieren des monoton steigenden Registers.

31. Verfahren nach Anspruch 30, in welchem das Einmal-Passwort erzeugt wird durch:
Verketten des monoton steigenden Registers (MIR) mit der dynamischen Variablen, um die Nutzlast zu produzieren, vor dem Verschlüsseln der Nutzlast, um die verschlüsselte Nutzlast zu produzieren;
Erzeugen einer ersten ganzen Zahl unter Verwendung der Bits mit der geringsten Signifikanz der verschlüsselten Nutzlast;
Erzeugen einer zweiten ganzen Zahl durch Verketten der zwei Bits mit der geringsten Signifikanz der dynamischen Variablen mit dem Bit mit der geringsten Signifikanz des monoton steigenden Registers; und,
Kombinieren der ersten ganzen Zahl mit der zweiten ganzen Zahl, um das Einmal-Passwort zu erzeugen.

32. Verfahren nach einem der Ansprüche 29 bis 31, in welchem der Verschlüsselungsalgorithmus der Advanced Encryption Standard (AES) ist.

33. Verfahren nach einem der Ansprüche 29 bis 32, in welchem der Schlüsselerzeugungsalgorithmus den Advanced Encryption Standard (AES) verwendet.

34. Verfahren nach Anspruch 33, in welchem der Schlüssel ein 128-Bit-Schlüssel ist.

35. Verfahren nach einem der Ansprüche 29 bis 34, in welchem die dynamische Variable Zeit ist.

36. Verfahren nach Anspruch 35, in welchem die dynamische Variable von einer externen Eingabe bezogen wird.

37. Verfahren nach einem der Ansprüche 29 bis 35, in welchem die dynamische Variable intern von der Smart Card (10) bereitgestellt wird.

38. Verfahren nach einem der Ansprüche 29 bis 37, in welchem das Token weiterhin eine Schnittstelleneinrichtung zum Kooperieren mit der Smart Card (10) umfasst, um die Erzeugung des Einmal-Passwortes zu ermöglichen, und wobei das Verfahren weiterhin die Schritte umfasst:
Empfangen der Benutzereingabe an der Schnittstelleneinrichtung;
Kommunizieren der Benutzereingabe von der Schnittstelleneinrichtung an die Smart Card (10); und,
Kommunizieren des als Antwort auf die Benutzereingabe erzeugten Einmal-Passwortes von der Smart Card (10) an die Schnittstelleneinrichtung.

39. Verfahren zum Authentifizieren eines Benutzers eines Authentifizierungs-Tokens umfassend die Schritte des Erzeugens eines Einmal-Passwortes durch das Verfahren nach einem der Ansprüche 29 bis 38 und das Weitergeben des Einmal-Passwortes an einen Dritten, um den Benutzer zu authentifizieren.

## Revendications

1. Jeton d'authentification destiné à générer un mot de passe à usage unique destiné à être utilisé lors de l'authentification d'un utilisateur du jeton d'authentification, dans lequel le jeton d'authentification comprend une carte mémoire (10) ayant :
une mémoire (13, 14, 15) stockant chacun d'un code client unique, d'une clé, d'une valeur d'amorce, et d'une application logicielle ; et
un processeur (16) destiné à exécuter l'application logicielle, dans lequel l'application logicielle réagit à une entrée utilisateur afin de valider l'entrée utilisateur par rapport au code client unique puis de générer le mot de passe à usage unique en tant que sortie en effectuant les étapes consistant à :
exécuter un algorithme cryptographique afin de crypter une variable dynamique avec la clé de façon à produire une charge utile cryptée ; et
utiliser les bits les moins significatifs de la charge utile cryptée et de la variable dynamique afin de produire le mot de passe à usage unique,
et dans lequel, avant la génération d'un mot de passe à usage unique suivant, l'application logicielle effectue en outre les étapes consistant à :
exécuter l'algorithme de génération de clé en utilisant la clé et la valeur d'amorce afin de générer une nouvelle clé et une nouvelle valeur d'amorce ;
remplacer la clé par la nouvelle clé ; et
remplacer la valeur d'amorce par la nouvelle valeur d'amorce.

2. Jeton selon la revendication 1, dans lequel la mémoire de la carte mémoire (10) stocke également un registre à augmentation monotone (MIR) et l'application logicielle comprend une partie de code destinée à maintenir le registre, et dans lequel l'application logicielle génère le mot de passe à usage unique en effectuant l'étape supplémentaire consistant à :
combiner le registre à augmentation monotone (MIR) avec la variable dynamique afin de produire une charge utile avant de crypter la charge utile avec la clé de façon à produire la charge utile cryptée ;
et dans lequel, avant la génération du mot de passe à usage unique suivant, l'application logicielle effectue les étapes supplémentaires consistant à :
exécuter l'algorithme de génération de clé en utilisant le registre à augmentation monotone (MIR) en plus de la clé et de la valeur d'amorce afin de générer la nouvelle clé et la nouvelle valeur d'amorce ; et
augmenter le registre à augmentation monotone.

3. Jeton selon la revendication 2, dans lequel le mot de passe à usage unique est généré en :
concaténant le registre à augmentation monotone (MIR) avec la variable dynamique afin de produire la charge utile avant de crypter la charge utile de façon à produire la charge utile cryptée ;
générant un premier entier en utilisant les bits les moins significatifs de la charge utile cryptée ;
générant un second entier en concaténant les deux bits les moins significatifs de la variable dynamique avec le bit le moins significatif du registre à augmentation monotone ; et
en combinant le premier entier avec le second entier afin de produire le mot de passe à usage unique.

4. Jeton selon l'une quelconque des revendications précédentes, dans lequel l'algorithme cryptographique est la norme de cryptage avancée (AES).

5. Jeton selon l'une quelconque des revendications précédentes, dans lequel l'algorithme de génération de clé utilise la norme de cryptage avancée (AES).

6. Jeton selon la revendication 5, dans lequel la clé est une clé de 128 bits.

7. Jeton selon l'une quelconque des revendications précédentes, dans lequel la mémoire comprend une mémoire morte (ROM) (13) dans laquelle l'application logicielle est gravée lors de la fabrication.

8. Jeton selon l'une quelconque des revendications précédentes, dans lequel l'application logicielle passe à un mode verrouillé si l'entrée utilisateur n'a pas été validée par rapport au code client unique au bout d'un nombre prédéterminé d'entrées utilisateur.

9. Jeton selon l'une quelconque des revendications précédentes, dans lequel l'application logicielle comprend une partie de code destinée à personnaliser le jeton en initialisant la clé.

10. Jeton selon la revendication 9, dans lequel l'application logicielle comprend une partie de code destinée à initialiser la clé en échangeant des messages avec un dispositif de personnalisation séparé utilisant un protocole d'échange de clés.

11. Jeton selon la revendication 10, dans lequel les messages du protocole d'échange de clés sont cryptés.

12. Jeton selon la revendication 11, dans lequel le protocole d'échange de clés utilise l'algorithme d'échange de clés de Diffie-Hellman.

13. Jeton selon l'une quelconque des revendications précédentes, dans lequel l'application logicielle comprend une partie de code destinée à personnaliser le jeton en initialisant la valeur d'amorce.

14. Jeton selon l'une quelconque des revendications précédentes, dans lequel la variable dynamique est le temps.

15. Jeton selon la revendication 14, dans lequel la variable dynamique est dérivée d'une entrée externe.

16. Jeton selon l'une quelconque des revendications 1 à 14, dans lequel la variable dynamique est fournie en interne par la carte mémoire.

17. Jeton selon l'une quelconque des revendications précédentes, dans lequel la carte mémoire (10) dérive une énergie électrique d'une entrée externe.

18. Jeton selon l'une quelconque des revendications 1 à 13, dans lequel le jeton comprend en outre un dispositif d'interface séparé destiné à coopérer avec la carte mémoire (10) afin de permettre la génération du mot de passe à usage unique, le dispositif d'interface comprenant :
un dispositif d'entrée utilisateur destiné à saisir l'entrée utilisateur à valider par rapport au code client unique ;
un dispositif de sortie utilisateur destiné à communiquer à l'utilisateur le mot de passe à usage unique généré par la carte mémoire ;
une interface de carte mémoire destinée à communiquer des données entre le dispositif d'interface et la carte mémoire (10), comprenant la communication à la carte mémoire (10) de l'entrée utilisateur reçue via le dispositif d'entrée utilisateur et la communication du mot de passe à usage unique généré par la carte mémoire (10) au dispositif de sortie utilisateur ;
un logiciel d'application d'interface destiné à gérer les interfaces ; et
un processeur destiné à exécuter le logiciel d'application d'interface.

19. Jeton selon la revendication 18, dans lequel le dispositif d'interface conserve une variable dynamique qui, en réponse à l'exécution des applications logicielles, est communiquée à la carte mémoire (10) afin d'être utilisée pour la génération du mot de passe à usage unique.

20. Jeton selon la revendication 19, dans lequel le dispositif d'interface comprend une horloge qui fournit la variable dynamique.

21. Jeton selon la revendication 20, dans lequel l'horloge est synchronisée avec une horloge externe.

22. Jeton selon l'une quelconque des revendications 18 à 21, dans lequel le dispositif d'interface est adapté afin de fournir une énergie électrique à la carte mémoire (10).

23. Jeton selon l'une quelconque des revendications 18 à 22, dans lequel le dispositif d'entrée utilisateur est un pavé numérique.

24. Jeton selon l'une quelconque des revendications 18 à 23, dans lequel le dispositif de sortie utilisateur est un afficheur.

25. Jeton selon l'une quelconque des revendications 18 à 24, dans lequel l'interface de carte mémoire est adaptée afin d'être directement couplée à la carte mémoire (10).

26. Jeton selon l'une quelconque des revendications 18 à 24, dans lequel l'interface de carte mémoire est adaptée afin d'être couplée à la carte mémoire (10) sur un canal de communication sans fil.

27. Jeton selon l'une quelconque des revendications 18 à 24, dans lequel le code client unique possède un codage couleur.

28. Système d'authentification comprenant un serveur d'authentification et un jeton d'authentification selon l'une quelconque des revendications précédentes, le serveur d'authentification étant adapté afin d'authentifier l'utilisateur du jeton selon le mot de passe à usage unique généré par le jeton.

29. Procédé de génération d'un mot de passe à usage unique destiné à être utilisé lors de l'authentification d'un utilisateur d'un jeton d'authentification comprenant une carte mémoire (10), le procédé comprenant les étapes consistant à :
stocker dans une mémoire (13, 14, 15) de la carte mémoire (10) chacun d'un code client unique, d'une clé, et d'une valeur d'amorce ; et
exécuter une application logicielle d'authentification de la carte mémoire (10) dans un processeur de la carte mémoire (10), moyennant quoi l'application logicielle valide une entrée utilisateur par rapport au code client unique puis génère le mot de passe à usage unique en effectuant les étapes consistant à :
exécuter un algorithme cryptographique afin de crypter une variable dynamique avec la clé de façon à produire une charge utile cryptée ; et
utiliser les bits les moins significatifs de la charge utile cryptée et de la variable dynamique afin de produire le mot de passe à usage unique,
et moyennant quoi, avant la génération d'un mot de passe à usage unique suivant, l'application logicielle effectue en outre les étapes consistant à :
exécuter un algorithme de génération de clé en utilisant la clé et l'amorce afin de générer une nouvelle clé et une nouvelle amorce ;
remplacer la clé par la nouvelle clé ; et
remplacer l'amorce par la nouvelle amorce.

30. Procédé selon la revendication 29, comprenant en outre le stockage dans une mémoire de la carte mémoire (10) d'un registre à augmentation monotone, et dans lequel l'application logicielle génère le mot de passe à usage unique en effectuant les étapes supplémentaires consistant à :
combiner le registre à augmentation monotone avec la variable dynamique afin de produire une charge utile avant de crypter la charge utile avec la clé de façon à produire la charge utile cryptée ;
et dans lequel, avant la génération du mot de passe à usage unique suivant, l'application logicielle effectue les étapes supplémentaires consistant à :
exécuter l'algorithme de génération de clé en utilisant le registre à augmentation monotone en plus de la clé et de la valeur d'amorce afin de générer la nouvelle clé et la nouvelle valeur d'amorce ; et
augmenter le registre à augmentation monotone.

31. Procédé selon la revendication 30, dans lequel le mot de passe à usage unique est généré en :
concaténant le registre à augmentation monotone (MIR) avec la variable dynamique afin de produire la charge utile avant de crypter la charge utile de façon à produire la charge utile cryptée ;
générant un premier entier en utilisant les bits les moins significatifs de la charge utile cryptée ;
générant un second entier en concaténant les deux bits les moins significatifs de la variable dynamique avec le bit le moins significatif du registre à augmentation monotone ; et
en combinant le premier entier avec le second entier afin de produire le mot de passe à usage unique.

32. Procédé selon l'une quelconque des revendications 29 à 31, dans lequel l'algorithme cryptographique est la norme de cryptage avancée (AES).

33. Procédé selon l'une quelconque des revendications 29 à 32, dans lequel l'algorithme de génération de clé utilise la norme de cryptage avancée (AES).

34. Procédé selon la revendication 33, dans lequel la clé est une clé de 128 bits.

35. Procédé selon l'une quelconque des revendications 29 à 34, dans lequel la variable dynamique est le temps.

36. Procédé selon la revendication 35, dans lequel la variable dynamique est dérivée d'une entrée externe.

37. Procédé selon l'une quelconque des revendications 29 à 35, dans lequel la variable dynamique est fournie en interne par la carte mémoire (10).

38. Procédé selon l'une quelconque des revendications 29 à 37, dans lequel le jeton comprend en outre un dispositif d'interface destiné à coopérer avec la carte mémoire (10) afin de permettre la génération du mot de passe à usage unique, et dans lequel le procédé comprend en outre les étapes consistant à :
recevoir l'entrée utilisateur au niveau du dispositif d'interface ;
communiquer l'entrée utilisateur entre le dispositif d'interface et la carte mémoire (10) ; et
communiquer le mot de passe à usage unique généré en réponse à l'entrée utilisateur entre la carte mémoire (10) et le dispositif d'interface.

39. Procédé d'authentification d'un utilisateur d'un jeton d'authentification comprenant les étapes de génération d'un mot de passe à usage unique à l'aide du procédé selon l'une quelconque des revendications 29 à 38 et de transmission du mot de passe à usage unique à un tiers afin d'authentifier l'utilisateur.
